# DEMANDE DE BREVET EUROPEEN

(11) **EP 3 560 860 A1**
(43) Date de publication de la demande: **30.10.2019**
(21) Numéro de dépôt: 19171220.7
(22) Date de dépôt: 25.04.2019
(51) Int. Cl.: B65G 15/44, B65G 15/16, B65G 37/00, B65G 21/20, B65G 15/18

(54) **CONVOYEUR A BANDE DE MATIERE PULVERULENTE OU GRANULEUSE EN VRAC**

(30) Priorité: 26.04.2018 FR 1853690
(71) Demandeur: Adinox, 76430 Oudalle (FR)
(72) Inventeur: VALLET, Christian, 76430 OUDALLE (FR); FLOCH, Pascal, 76430 OUDALLE (FR)
(74) Mandataire: Cabinet Chaillot

(57) **Abrégé**

L'invention a pour objet un convoyeur à bande de matière pulvérulente ou granuleuse en vrac (1) comprenant une première bande transporteuse (2) et une seconde bande transporteuse (3), la première bande transporteuse (2) comprenant des tasseaux (7), la première bande transporteuse (2) et au moins une partie de la seconde bande transporteuse (3) étant inclinées par rapport à l'horizontale, la partie ascendante de ladite au moins une partie de la seconde bande transporteuse (3) étant disposée en regard de la partie ascendante de la première bande transporteuse (1) de telle sorte que les tasseaux (7) de la première bande transporteuse (2) sont contigus à la surface externe de la seconde bande transporteuse (3), le convoyeur à bande (1) comprenant en outre des premier et second sols de glissement plats (8, 9) sur lesquels les bandes transporteuses (2, 3) sont respectivement configurées pour glisser.

## Description

La présente invention concerne le domaine du transport de matière pulvérulente ou granuleuse en vrac, et porte en particulier sur un convoyeur à bande de matière pulvérulente ou granuleuse en vrac.

Les convoyeurs à bande classiques permettent de transporter de la matière pulvérulente ou granuleuse en vrac, telle que des grains de céréales, du thé, du café, du ciment ou des catalyseurs, de manière à déplacer la matière pulvérulente ou granuleuse en vrac d'un emplacement d'origine à un emplacement de destination.

Certains convoyeurs à bande existants permettent également un transport incliné, par exemple sensiblement vertical, de la matière pulvérulente ou granuleuse par emprisonnement de la matière pulvérulente ou granuleuse entre deux bandes transporteuses sans fin dont l'une comprend des godets sur sa surface externe, la surface interne de chacune desdites deux bandes transporteuses glissant sur une pluralité de rouleaux ou plaques de glissement. Ces convoyeurs à bande existants permettent ainsi de charger un camion par élévation de la matière pulvérulente ou granuleuse au-dessus de la benne du camion, ou de remplir un silo par élévation de la matière pulvérulente ou granuleuse vers le sommet du silo. La demande de brevet britannique GB395031A divulgue un tel convoyeur à bande sensiblement vertical. Cependant, lors du déplacement d'une bande transporteuse sur des rouleaux, le poids de la matière pulvérulente ou granuleuse transportée sur la bande transporteuse entraîne une déformation de la bande transporteuse entre chaque rouleau. Ces convoyeurs à rouleaux sont donc énergivores en raison de la déformation des bandes qui entraîne un besoin d'énergie plus important pour entraîner les bandes en rotation, et ces convoyeurs à rouleaux nécessitent également un entretien important dû à l'usure des bandes contre les rouleaux.

La présente invention vise à résoudre les inconvénients de l'état antérieur de la technique, en proposant un convoyeur à bande de matière pulvérulente ou granuleuse en vrac comprenant une première bande transporteuse à tasseaux et une seconde bande transporteuse en regard, ainsi que des premier et second sols de glissement plats sur lesquels les première et seconde bandes transporteuses sont respectivement configurées pour glisser, les sols de glissements plats empêchant ainsi la déformation des bandes transporteuses lors du transport de la matière pulvérulente ou granuleuse entre les deux bandes transporteuses.

La présente invention a donc pour objet un convoyeur à bande de matière pulvérulente ou granuleuse en vrac comprenant une première bande transporteuse sans fin apte à être entraînée en rotation par un premier tambour rotatif inférieur et un premier tambour rotatif supérieur et une seconde bande transporteuse sans fin apte à être entraînée en rotation par un second tambour rotatif inférieur et un second tambour rotatif supérieur, la première bande transporteuse comprenant des tasseaux répartis sur sa surface externe, chaque tasseau s'étendant dans la direction transversale de la première bande transporteuse, la première bande transporteuse et au moins une partie de la seconde bande transporteuse étant inclinées par rapport à l'horizontale de telle sorte que chacune des première et seconde bandes transporteuses comprend une partie ascendante et une partie descendante, la partie ascendante de ladite au moins une partie de la seconde bande transporteuse étant disposée en regard de la partie ascendante de la première bande transporteuse de telle sorte que les tasseaux de la première bande transporteuse sont contigus à la surface externe de la seconde bande transporteuse dans la région dans laquelle les parties ascendantes des première et seconde bandes transporteuses sont en regard, appelée région d'élévation de matière pulvérulente ou granuleuse, caractérisé par le fait que le convoyeur à bande comprend en outre des premier et second sols de glissement plats sur lesquels les première et seconde bandes transporteuses sont respectivement configurées pour glisser, lesdits premier et second sols de glissement plats étant disposés respectivement contre les surfaces internes des parties ascendantes des première et seconde bandes transporteuses dans la région d'élévation de matière pulvérulente ou granuleuse.

Ainsi, le convoyeur à bande selon l'invention permet une élévation de la matière pulvérulente ou granuleuse transportée entre les deux bandes transporteuses, la hauteur d'élévation dépendant de l'inclinaison et de la longueur des deux bandes transporteuses.

L'utilisation de sols de glissement plats permet d'empêcher la déformation des bandes transporteuses lors du transport de la matière pulvérulente ou granuleuse entre celles-ci. Ainsi, comparé à un convoyeur à rouleaux, ce convoyeur à sols de glissement plats nécessite moins d'entretien, est moins énergivore et provoque moins d'usure des bandes transporteuses.

Les deux bandes transporteuses possèdent des sens de rotation opposés et sont ascendantes dans la région d'élévation de matière pulvérulente ou granuleuse. En outre, du fait que les tasseaux de la première bande transporteuse sont contigus à la surface externe de la seconde bande transporteuse dans la région d'élévation de matière pulvérulente ou granuleuse, des compartiments sont formés entre deux tasseaux successifs de la première bande transporteuse dans la région d'élévation de matière pulvérulente ou granuleuse, chaque compartiment étant apte à recevoir de la matière pulvérulente ou granuleuse afin de permettre son élévation. Le convoyeur permet ainsi le transport de la matière pulvérulente ou granuleuse à un angle pouvant aller jusqu'à 90° sans abimer celle-ci, par emprisonnement de la matière pulvérulente ou granuleuse dans les compartiments formés entre les deux bandes transporteuses dans la région d'élévation de matière pulvérulente ou granuleuse, la seconde bande transporteuse entraînant la matière pulvérulente ou granuleuse et la première bande transporteuse capturant et emprisonnant la matière pulvérulente ou granuleuse entre ses tasseaux.

Les tasseaux possèdent, de préférence, une forme longue et relativement fine à section carrée ou rectangulaire, mais pourraient également prendre n'importe quelle forme, telle qu'une forme de chevron, sans s'écarter du cadre de la présente invention.

Selon une caractéristique particulière de l'invention, la seconde bande transporteuse comprend des tasseaux répartis sur sa surface externe, chaque tasseau s'étendant dans la direction transversale de la seconde bande transporteuse.

Les tasseaux de la seconde bande transporteuse sont de préférence disposés en quinconce par rapport à ceux de la première bande transporteuse.

Selon une caractéristique particulière de l'invention, l'espacement entre deux tasseaux est régulier et dépend du produit véhiculé, selon sa densité et sa granulométrie. Pour une bande de largeur 400 mm par exemple, et une hauteur de tasseau de 60 mm, l'espacement moyen pourra pour des produits courants de densité 0,7, avoir un pas moyen de l'ordre de 250 mm.

Ainsi, les compartiments formés entre les deux bandes transporteuses dans la région d'élévation de matière pulvérulente ou granuleuse sont réguliers, la quantité de matière pulvérulente ou granuleuse transportée dans chaque compartiment étant identique.

Selon une caractéristique particulière de l'invention, le convoyeur à bande comprend en outre au moins deux rouleaux de guidage configurés pour couder la seconde bande transporteuse après la région d'élévation de matière pulvérulente ou granuleuse.

Ainsi, les deux rouleaux de guidage permettent de créer un coude sur la seconde bande transporteuse afin de créer une partie supérieure, de préférence sensiblement horizontale, de la seconde bande transporteuse, ladite partie supérieure sensiblement horizontale de la seconde bande transporteuse permettant de transporter la matière pulvérulente ou granuleuse vers un collecteur ou le sommet d'un tas de matière pulvérulente ou granuleuse, une fois que la matière pulvérulente ou granuleuse a été élevée par l'action conjointe des deux bandes transporteuses.

La matière pulvérulente ou granuleuse peut ainsi tout d'abord être déchargée en partie basse du convoyeur à bande côté première bande transporteuse, puis élevée par l'action conjointe des deux bandes transporteuses, avant d'être déchargée par la partie supérieure sensiblement horizontale de la seconde bande transporteuse vers un collecteur tel qu'un silo ou une benne de camion.

Selon une caractéristique particulière de l'invention, l'inclinaison des parties ascendantes des première et seconde bandes transporteuses dans la région d'élévation de matière pulvérulente ou granuleuse est identique et comprise entre 85° et 90° par rapport à l'horizontale.

Ainsi, le convoyeur à bande permet un transport vertical de la matière pulvérulente ou granuleuse.

Selon une caractéristique particulière de l'invention, le convoyeur à bande comprend en outre un dispositif de balayeuse disposé en amont des première et seconde bandes transporteuses.

Ainsi, le dispositif de balayeuse, disposé en partie basse du convoyeur à bande, permet d'entraîner la matière pulvérulente ou granuleuse vers les bandes transporteuses au niveau de leurs tambours inférieurs.

Selon une caractéristique particulière de l'invention, le convoyeur à bande comprend en outre un châssis sur lequel les premier et second tambours inférieurs, les premier et second tambours supérieurs, les premier et second sols de glissement et, le cas échéant, le dispositif de balayeuse et les au moins deux rouleaux de guidage sont fixés.

Selon une caractéristique particulière de l'invention, le second tambour inférieur est disposé à une hauteur inférieure à celle du premier tambour inférieur.

Ainsi, le tambour inférieur de la seconde bande transporteuse étant légèrement plus bas que le tambour inférieur de la première bande transporteuse à tasseaux, la matière pulvérulente ou granuleuse peut être collectée très bas, pratiquement au niveau du sol.

Selon une première variante de l'invention, les vitesses de rotation des première et seconde bandes transporteuses sont identiques.

Selon une seconde variante de l'invention, la vitesse de rotation de la seconde bande transporteuse est supérieure à celle de la première bande transporteuse.

Ainsi, si v1 est la vitesse de la seconde bande transporteuse et v2 est la vitesse de la première bande transporteuse, on a v1>v2, afin qu'il ne puisse pas s'accumuler de matière, c'est-à-dire de poussières fines, entre la tête des tasseaux et la seconde bande transporteuse, ce qui pourrait occasionner des bourrages.

Selon une caractéristique particulière de l'invention, les première et seconde bandes transporteuses sont réalisées en au moins une matière plastique parmi les bandes commercialisées de façon standard ; caoutchouc naturel ou de synthèse, matières plastiques souples, polyéthylène, poly(chlorure de vinyle) (PVC), silicone.

Selon une caractéristique particulière de l'invention, les premier et second sols de glissement plats sont réalisés en au moins une matière parmi des métaux (par exemple, le fer, l'aluminium et/ou le cuivre) et leurs alliages, des matières plastiques (par exemple, le polyéthylène haute densité (PEHD) et/ou le poly(chlorure de vinyle) (PVC)) et des matériaux composites.

Les tasseaux sont, de préférence, réalisés dans la même matière que la bande transporteuse associée.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est une vue en perspective du convoyeur à bande de matière pulvérulente ou granuleuse en vrac selon la présente invention ;
- la Figure 2 est une vue de côté du convoyeur à bande de la Figure 1 ; et
- la Figure 3 est un agrandissement de la Figure 2 au niveau des deux tambours rotatifs inférieurs du convoyeur à bande.

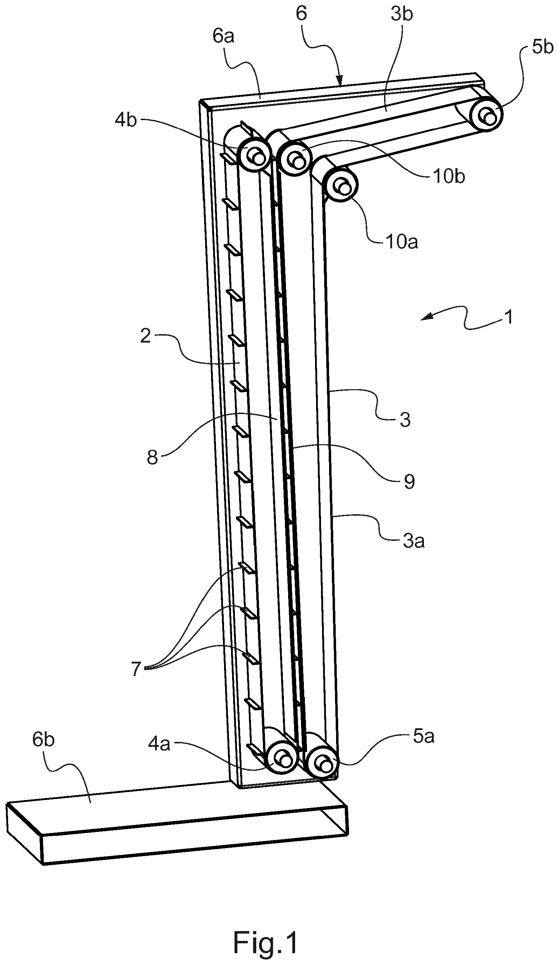

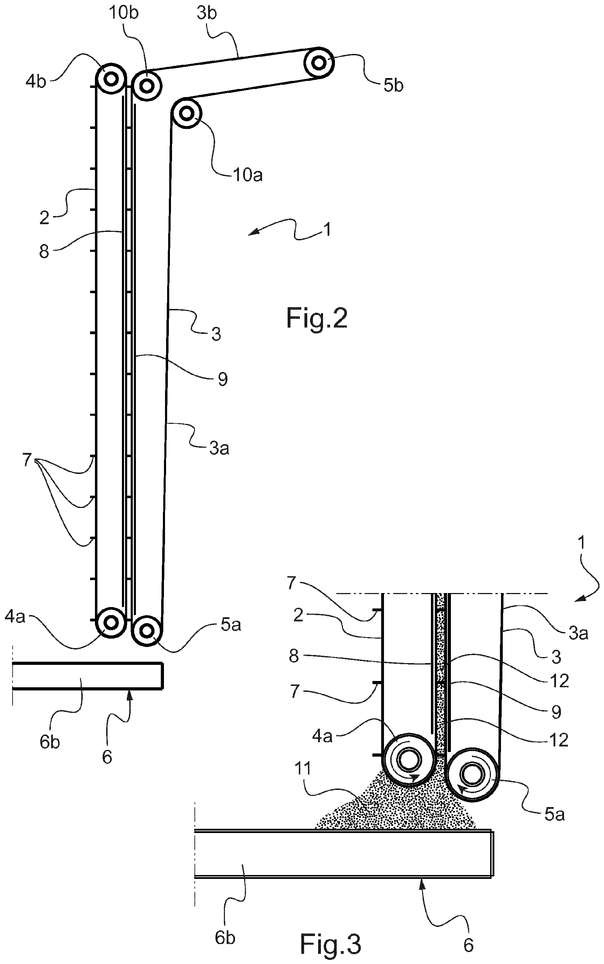

Si l'on se réfère aux Figures 1 et 2, on peut voir qu'il y est représenté un convoyeur à bande de matière pulvérulente ou granuleuse en vrac 1 selon la présente invention.

Le convoyeur à bande de matière pulvérulente ou granuleuse en vrac 1 comprend une première bande transporteuse sans fin 2 et une seconde bande transporteuse sans fin 3.

La première bande transporteuse 2 est apte à être entraînée en rotation par un premier tambour rotatif inférieur 4a et un premier tambour rotatif supérieur 4b.

La seconde bande transporteuse 3 est apte à être entraînée en rotation par un second tambour rotatif inférieur 5a et un second tambour rotatif supérieur 5b.

Le convoyeur à bande 1 comprend en outre un châssis 6 sur lequel les premier et second tambours inférieurs 4a, 5a et les premier et second tambours supérieurs 4b, 5b sont fixés en rotation, lesdits premier et second tambours inférieurs 4a, 5a et lesdits premier et second tambours supérieurs 4b, 5b étant entraînés en rotation par un ou plusieurs moteurs, qui peuvent notamment être des moteurs électriques, pneumatiques ou encore hydrauliques (non représentés aux Figures 1 et 2) et/ou par un ou plusieurs engrenages (non représentés aux Figures 1 et 2) .

Il est à noter que, sur la Figure 1, uniquement l'une des parois latérales 6a et la paroi inférieure 6b du châssis 6 ont été représentées afin de ne pas surcharger le dessin.

La paroi inférieure 6b du châssis 6 est disposée sous les premier et second tambours inférieurs 4a, 5a.

La première bande transporteuse 2 comprend des tasseaux 7 répartis sur sa surface externe, chaque tasseau 7 s'étendant dans la direction transversale de la première bande transporteuse 2.

La surface externe de la seconde bande transporteuse 3 est lisse.

Il est à noter que la seconde bande transporteuse 3 pourrait également comprendre des tasseaux répartis sur sa surface externe, sans s'écarter du cadre de la présente invention.

Les tasseaux 7 possèdent une forme rectiligne et relativement fine à section carrée ou rectangulaire, mais pourraient également prendre n'importe quelle forme, telle qu'une forme de chevron, sans s'écarter du cadre de la présente invention.

L'espacement entre deux tasseaux 7 est régulier et dépend du produit véhiculé, selon sa densité et sa granulométrie. Pour une bande de largeur 400 mm, par exemple, et une hauteur de tasseau de 60 mm, l'espacement moyen pourra, pour des produits courants de densité 0,7, avoir un pas moyen de l'ordre de 250 mm.

Les première et seconde bandes transporteuses 2, 3 sont réalisées en au moins une matière plastique parmi les bandes commercialisées de façon standard ; caoutchouc naturel ou de synthèse, matières plastiques souples, polyéthylène, poly(chlorure de vinyle) (PVC), silicone.

Les tasseaux 7 sont réalisés dans la même matière que la première bande transporteuse 2.

La première bande transporteuse 2 et la partie inférieure 3a de la seconde bande transporteuse 3 sont inclinées par rapport à l'horizontale.

L'inclinaison de la première bande transporteuse 2 et de la partie inférieure 3a de la seconde bande transporteuse 3 est identique et sensiblement de 90° par rapport à l'horizontale.

Il est à noter que ladite inclinaison pourrait également être comprise entre 85° et 90° par rapport à l'horizontale, sans s'écarter du cadre de la présente invention.

Les première et seconde bandes transporteuses 2, 3 possèdent des sens de rotation opposés de telle sorte que la partie ascendante de la partie inférieure 3a de la seconde bande transporteuse 3 est disposée en regard de la partie ascendante de la première bande transporteuse 2, les tasseaux 7 de la première bande transporteuse 2 étant ainsi contigus à la surface externe de la seconde bande transporteuse 3 dans la région dans laquelle les parties ascendantes des première et seconde bandes transporteuses 2, 3 sont en regard, appelée par la suite région d'élévation de matière pulvérulente ou granuleuse.

Le convoyeur à bande 3 comprend en outre des premier et second sols de glissement plats 8, 9 sur lesquels les première et seconde bandes transporteuses 2, 3 sont respectivement configurées pour glisser, lesdits premier et second sols de glissement plats 8, 9 étant disposés respectivement contre les surfaces internes des parties ascendantes des première et seconde bandes transporteuses 2, 3 dans la région d'élévation de matière pulvérulente ou granuleuse.

Les premier et second sols de glissement sont fixés au châssis 6.

Les premier et second sols de glissement 8, 9 sont réalisées en au moins une matière parmi des métaux (par exemple, le fer, l'aluminium et/ou le cuivre) et leurs alliages, des matières plastiques (par exemple, le polyéthylène haute densité (PEHD) et/ou le poly(chlorure de vinyle) (PVC)) et des matériaux composites.

L'utilisation de sols de glissement plats 8, 9 permet d'empêcher la déformation des bandes transporteuses 2, 3 lors du transport d'une matière pulvérulente ou granuleuse entre celles-ci.

Le convoyeur à bande 1 comprend en outre un rouleau de guidage inférieur 10a et un rouleau de guidage supérieur 10b configurés pour couder la seconde bande transporteuse 3 après la région d'élévation de matière pulvérulente ou granuleuse.

Le rouleau de guidage supérieur 10b possède une hauteur légèrement inférieure à celle du premier tambour supérieur 4b de la première bande transporteuse 2, le rouleau de guidage 10a ayant une hauteur inférieure à celle du rouleau de guidage supérieur 10b.

Le rouleau de guidage supérieur 10b est disposé contre la surface interne de la seconde bande transporteuse 3, tandis que le rouleau de guidage inférieur 10a est disposé contre la surface externe de la seconde bande transporteuse 3.

Les rouleaux de guidage inférieur 10a et supérieur 10b sont fixés sur le châssis 6.

Les deux rouleaux de guidage 10a, 10b permettent ainsi de créer un coude sur la seconde bande transporteuse 3 afin de créer une partie supérieure 3b de la seconde bande transporteuse 3 qui possède une faible inclinaison par rapport à l'horizontale.

Il est à noter que la partie supérieure 3b de la seconde bande transporteuse 3 pourrait également être horizontale ou descendante, sans s'écarter du cadre de la présente invention.

La partie supérieure 3b de la seconde bande transporteuse 3 permet de transporter la matière pulvérulente ou granuleuse vers un collecteur ou le sommet d'un tas de matière pulvérulente ou granuleuse, une fois que la matière pulvérulente ou granuleuse a été élevée par l'action conjointe des deux bandes transporteuses 2, 3, comme cela sera décrit plus en détail à la Figure 3.

Si l'on se réfère à la Figure 3, on peut voir qu'il y est représenté le convoyeur à bande 1 au niveau des premier et second tambours inférieurs 4a, 5a lorsqu'une matière pulvérulente ou granuleuse 11 en vrac est disposée sur la paroi inférieure 6b du châssis 6.

Les flèches représentées sur les premier et second tambours inférieurs 4a, 5a à la Figure 3 indiquent les sens de rotation de ces derniers.

Du fait que les tasseaux 7 de la première bande transporteuse 2 sont contigus à la surface externe de la seconde bande transporteuse 3 dans la région d'élévation de matière pulvérulente ou granuleuse, des compartiments 12 sont formés entre deux tasseaux 7 successifs de la première bande transporteuse 2 dans la région d'élévation de matière pulvérulente ou granuleuse, chaque compartiment 12 étant apte à recevoir de la matière pulvérulente ou granuleuse 11 afin de permettre son élévation entre les deux bandes transporteuses 2, 3. Le convoyeur à bande 1 permet ainsi le transport de la matière pulvérulente ou granuleuse 11 à un angle pouvant aller jusqu'à 90° sans abimer celle-ci, par emprisonnement de la matière pulvérulente ou granuleuse 11 dans les compartiments 12 formés entre les deux bandes transporteuses 2, 3 dans la région d'élévation de matière pulvérulente ou granuleuse, la seconde bande transporteuse 3 entraînant la matière pulvérulente ou granuleuse 1 et la première bande transporteuse 2 capturant et emprisonnant la matière pulvérulente ou granuleuse 11 par l'intermédiaire de ses tasseaux 7.

L'espacement entre les tasseaux 7 étant régulier, les compartiments 12 formés entre les deux bandes transporteuses 2, 3 sont également réguliers, la quantité de matière pulvérulente ou granuleuse 11 transportée dans chaque compartiment 12 étant ainsi identique.

La matière pulvérulente ou granuleuse 11 peut ainsi tout d'abord être déchargée sur la paroi inférieure 6b du châssis 6 au niveau des premier et second tambours inférieurs 4a, 5a du convoyeur à bande 1, puis être élevée par l'action conjointe des deux bandes transporteuses 2, 3, avant d'être déchargée par la partie supérieure 3b de la seconde bande transporteuse 3 vers un collecteur tel qu'un silo ou une benne de camion.

La vitesse de rotation de la seconde bande transporteuse 3 est supérieure à celle de la première bande transporteuse 2, afin qu'il ne puisse pas s'accumuler de matière, c'est-à-dire de poussières fines, entre la tête des tasseaux 7 et la seconde bande transporteuse 3, ce qui pourrait occasionner des bourrages.

Il est à noter que la vitesse de rotation de la seconde bande transporteuse 3 pourrait également être identique à celle de la première bande transporteuse 2, sans s'écarter du cadre de la présente invention.

Le second tambour inférieur 5a est disposé à une hauteur légèrement inférieure à celle du premier tambour inférieur 4a, ce qui permet à la matière pulvérulente ou granuleuse 11 de pouvoir être collectée très bas, pratiquement au niveau de la paroi inférieure 6b du châssis.

Le convoyeur à bande 1 comprend également un dispositif de balayeuse (non représenté sur les Figures 1 à 3) disposé en amont des première et seconde bandes transporteuses 2, 3, ledit dispositif de balayeuse étant configuré pour entraîner la matière pulvérulente ou granuleuse 11 sur la paroi inférieure 6b du châssis 6 vers les bandes transporteuses 2, 3 au niveau de leurs tambours inférieurs 4a, 5a.

## Revendications

1. Convoyeur à bande de matière pulvérulente ou granuleuse en vrac (1) comprenant une première bande transporteuse sans fin (2) apte à être entraînée en rotation par un premier tambour rotatif inférieur (4a) et un premier tambour rotatif supérieur (4b) et une seconde bande transporteuse sans fin (3) apte à être entraînée en rotation par un second tambour rotatif inférieur (5a) et un second tambour rotatif supérieur (5b), la première bande transporteuse (2) comprenant des tasseaux (7) répartis sur sa surface externe, chaque tasseau (7) s'étendant dans la direction transversale de la première bande transporteuse (2), la première bande transporteuse (2) et au moins une partie de la seconde bande transporteuse (3) étant inclinées par rapport à l'horizontale de telle sorte que chacune des première et seconde bandes transporteuses (2, 3) comprend une partie ascendante et une partie descendante, la partie ascendante de ladite au moins une partie de la seconde bande transporteuse (3) étant disposée en regard de la partie ascendante de la première bande transporteuse (1) de telle sorte que les tasseaux (7) de la première bande transporteuse (2) sont contigus à la surface externe de la seconde bande transporteuse (3) dans la région dans laquelle les parties ascendantes des première et seconde bandes transporteuses (2, 3) sont en regard, appelée région d'élévation de matière pulvérulente ou granuleuse, **caractérisé par le fait que** le convoyeur à bande (1) comprend en outre des premier et second sols de glissement plats (8, 9) sur lesquels les première et seconde bandes transporteuses (2, 3) sont respectivement configurées pour glisser, lesdits premier et second sols de glissement plats (8, 9) étant disposés respectivement contre les surfaces internes des parties ascendantes des première et seconde bandes transporteuses (2, 3) dans la région d'élévation de matière pulvérulente ou granuleuse.

2. Convoyeur à bande (1) selon la revendication 1, **caractérisé par le fait que** le convoyeur à bande (1) comprend en outre au moins deux rouleaux de guidage (10a, 10b) configurés pour couder la seconde bande transporteuse (3) après la région d'élévation de matière pulvérulente ou granuleuse.

3. Convoyeur à bande (1) selon l'une des revendications 1 et 2, **caractérisé par le fait que** l'inclinaison des parties ascendantes des première et seconde bandes transporteuses (2, 3) dans la région d'élévation de matière pulvérulente ou granuleuse est identique et comprise entre 85° et 90° par rapport à l'horizontale.

4. Convoyeur à bande (1) selon l'une des revendications 1 à 3, **caractérisé par le fait que** le convoyeur à bande (1) comprend en outre un dispositif de balayeuse disposé en amont des première et seconde bandes transporteuses (2, 3).

5. Convoyeur à bande (1) selon l'une des revendications 1 à 4, **caractérisé par le fait que** le convoyeur à bande (1) comprend en outre un châssis (6) sur lequel les premier et second tambours inférieurs (4a, 5a), les premier et second tambours supérieurs (4b, 5b), les premier et second sols de glissement (8, 9) et, le cas échéant, le dispositif de balayeuse et les au moins deux rouleaux de guidage (10a, 10b) sont fixés.

6. Convoyeur à bande (1) selon l'une des revendications 1 à 5, **caractérisé par le fait que** le second tambour inférieur (5a) est disposé à une hauteur inférieure à celle du premier tambour inférieur (4a).

7. Convoyeur à bande (1) selon l'une des revendications 1 à 6, **caractérisé par** le fait les première et seconde bandes transporteuses (2, 3) sont configurées pour être entraînées, en utilisation, à des vitesses de rotation identiques.

8. Convoyeur à bande (1) selon l'une des revendications 1 à 6, **caractérisé par le fait que** la seconde bande transporteuse (3) est configurée pour être entraînée, en utilisation, à une vitesse de rotation supérieure à celle de la première bande transporteuse (2).

9. Convoyeur à bande (1) selon l'une des revendications 1 à 7, **caractérisé par le fait que** la seconde bande transporteuse (3) comprend des tasseaux répartis sur sa surface externe, chaque tasseau s'étendant dans la direction transversale de la seconde bande transporteuse (3).
